# EUROPÄISCHE PATENTSCHRIFT

(11) **EP 0 426 968 B1**
(45) Veröffentlichungstag und Bekanntmachung des Hinweises auf die Patenterteilung: **29.09.1993**
(21) Anmeldenummer: 90117154.6
(22) Anmeldetag: 06.09.1990
(51) Int. Cl.: G01N 21/90

(54) **Vorrichtung zum Prüfen der Mündung von Flaschen oder dergleichen**
Device for the control of the mouth of bottles or the like
Dispositif pour le contrôle de la bouche de bouteilles ou d'analogues

(30) Priorität: 06.10.1989 CH 3664/89
(43) Veröffentlichungstag der Anmeldung: 15.05.1991
(73) Patentinhaber: ELPATRONIC AG, CH-6300 Zug (CH)
(72) Erfinder: Apter, Robert, CH-8964 Rudolfstetten (CH)

(56) Entgegenhaltungen:
- DE-A- 3 631 973
- US-A- 4 606 635
- US-A- 4 758 084

## Beschreibung

Die Erfindung betrifft eine Vorrichtung zum Prüfen der Mündung von Flaschen od.dgl. aus durchsichtigem Material, mit einer in der Achse der zu prüfenden Flasche angeordneten Kameraeinrichtung zum Aufnehmen von Bildern der Mündung zum Feststellen von Defekten, mit einer Lichtquelle und mit wenigstens einem ersten Lichtleitkörper, der eine koaxiale Sichtöffnung und eine erste Lichtaustrittsfläche zum Beleuchten der Mündung aufweist.

Eine bekannte Vorrichtung dieser Art (US-PS 4 731 649) hat einen Lichtleitkörper in Form einer lichtdurchlässigen Platte, über welcher mehrere Stroboskoplampen angeordnet sind. An der Unterseite der lichtdurchlässigen Platte sind zwei Prismen befestigt, welche Licht von der Seite her nach innen und schräg nach oben auf den Mündungsrand richten, damit die Kameraeinrichtung ein Videobild durch die Sichtöffnung der lichtdurchlässigen Platte hindurch aufnehmen kann. Die Prismen sind beiderseits eines Kanals angeordnet, durch den die Mündung der zu prüfenden Flasche hindurchbewegt wird. In diesem Fall ist die Sichtöffnung eine ovale Öffnung, und die lichtdurchlässige Platte muß zusätzliches Licht zum Beleuchten der Mündung von vorn und hinten liefern, weil die Prismen die Mündung nur von der Seite beleuchten können. Die Sichtöffnung kann zwar auch kreisförmig sein, in beiden Fallen ist es bei der bekannten Vorrichtung aber nicht möglich, die obere Stirnfläche der Flaschenmündung, also bei einer Kronenkorkenflasche die Lippe zu prüfen. Da bei der bekannten Vorrichtung die Mündung nur seitlich beleuchtet wird, kann die Videokamera auch nur eine Art Sammelbild aufnehmen, das zahlreiche Defekte enthalten kann, die sich irgendwo im Material der Flaschenmündung oder an deren Seite, nicht aber an der Lippenoberfläche selbst befinden. Die bekannte Vorrichtung eignet sich daher eher für die Prüfung der Mündung von Flaschen in einem Flaschenherstellbetrieb und nicht in einem Abfüllbetrieb, wo mit wesentlich höheren Flaschendurchsätzen gearbeitet wird und hauptsächlich Defekte interessieren, welche die Dichtigkeit einer Flasche, insbesondere einer wiederzubefüllenden Flasche beeinträchtigen können. Außerdem arbeitet die bekannte Vorrichtung ungenau, weil mit ihr eine gleichmäßige kreisförmige Beleuchtung nicht möglich ist. Die Beleuchtung der Vorder- und der Rückseite der Mündung muß notwendigerweise ein Kompromiß sein, da die Mündung zwischen den Prismen hindurchgeführt werden soll. Bei der bekannten Vorrichtung kann dieser Kompromiß in Kauf genommen werden, weil hauptsächlich Defekte interessieren, die in dem Flaschengewinde oder in dem Mündungsteil unterhalb der Lippe vorhanden und in Blickrichtung längs der Flaschenachse nicht ohne weiteres sichtbar sind.

Aufgabe der Erfindung ist es, eine Vorrichtung der eingangs genannten Art so auszubilden, daß sie auf einfache Weise und im Durchlaufbetrieb ein zuverlässiges und gleichmäßig ausgeleuchtetes Bild der oberen Stirnfläche der Mündungslippe liefern kann, insbesondere der Mündungslippe von Kronenkorkenflaschen oder allgemein von Behältern aus durchsichtigem Material, die eine oben abgerundete Mündungslippe aufweisen.

Diese Aufgabe ist erfindungsgemäß dadurch gelöst, daß der erste Lichtleitkörper kreisringförmig ausgebildet ist, daß die Sichtöffnung die Form eines ersten geraden Kegelstumpfes hat, der sich zu der von der Kameraeinrichtung abgewandten Stirnfläche des Lichtleitkörpers hin erweitert und mit seiner Mantelfläche die Lichtaustrittsfläche bildet, und daß die Mantellinie des ersten Kegelstumpfes einen Böschungswinkel mit einem Wert zwischen 30° und 45° bildet.

Da bei der Vorrichtung nach der Erfindung der erste Lichtleitkörper kreisringförmig ausgebildet ist und die Sichtöffnung die Form eines ersten geraden Kegelstumpfes hat, gibt der Lichtleitkörper das in ihn durch die Lichtquelle eingestrahlte Licht in Form eines sich zur Mündungslippe der zu prüfenden Flasche hin verjüngenden Lichtkegelstumpfes ab, der die Mündungslippe überall gleichmäßig beleuchtet, wenn diese in passender Höhe konzentrisch unter dem ersten Lichtleitkörper angeordnet ist. Der genaue Wert des Böschungswinkels, der gewählt wird, ist von der Höhe des optischen Systems über der Flaschenmündung und von deren Durchmesser abhängig .

Reflektierte Lichtstrahlen verlassen die obere Stirnfläche der Mündungslippe unter einem Winkel, der gleich dem Einfallswinkel ist. Die Kameraeinrichtung ist vertikal über der Flasche in der Flaschenachse angeordnet und wird, da sie die Flaschenmündung unter einem Winkel von etwa 0° aufnimmt, reflektiertes Licht lediglich aus der Mitte der Mündungslippe und von den Rändern der Mündungslippe empfangen. Zwischen dem Scheitel und den beiden Rändern der Mündungslippe wird das Licht total reflektiert, so daß diese beiden Bereiche für die Kamera als dunkle Ringe erscheinen, die von drei hellen Ringen eingefaßt sind. Die Vorrichtung nach der Erfindung arbeitet also mit einer Dunkelfeldbeleuchtung. Erst wenn ein Defekt vorhanden ist, erscheint dieser hell auf dunklem Hintergrund und kann ohne weiteres wahrgenommen werden. Jeder Defekt ergibt nämlich Streulicht, das in die Kamera gelangt. Wenn Defekte nicht zwischen, sondern an den Rändern der Mündungslippe auftreten, erscheinen sie für die Kamera als Stellen mit geringerer Beleuchtung, weshalb sie dunkel auf hellem Hintergrund aufgenommen werden. Die Vorrichtung nach der Erfindung arbeitet also mit einer Kombination aus der erwähnten Dunkelfeldbeleuchtung über der Mündungslippe und reflektierter Beleuchtung an deren Rändern und in deren Mitte.

Vorteilhafte Ausgestaltungen der Erfindung bilden den Gegenstand der Unteransprüche.

In der Ausgestaltung der Erfindung nach Anspruch 2 lassen sich die in dem Lichtleitkörper stattfindenden Totalreflexionen, bis das Licht schließlich die Lichtaustrittsfläche an der Sichtöffnung erreicht, besser steuern, so daß mehr Licht zur Lichtaustrittsfläche gelangt und der Beleuchtungswirkungsgrad dadurch verbessert wird.

Der Böschungswinkel von 45° in der Ausgestaltung der Erfindung nach Anspruch 3 entspricht auch einem Lichteinfallswinkel von 45° in der Mitte der oberen Stirnfläche der Mündungslippe. Dieser Winkelwert wird bevorzugt, weil sich so Bilder von der Flaschenmündung aufnehmen lassen, die aus symmetrischen hellen und dunklen Ringen bestehen, bei denen das Intensitätsmaximum bzw. -minimum jeweils in der Ringmitte liegt.

Durch die Wahl der Mantellinienlänge des ersten Kegelstumpfes gemäß der Ausgestaltung der Erfindung nach Anspruch 6 wird jeglicher Lichtverlust bei der Beleuchtung der Mündungslippe vermieden.

In der Ausgestaltung der Erfindung nach Anspruch 7 sind sämtliche Außenflächen des Lichtleitkörpers mit Ausnahme der Lichteintritts- und der Lichtaustrittsfläche durch eine schwarze Beschichtung abgedeckt, um den Einfall von Streulicht und Lichtverluste zu vermeiden. Die kranzförmige Lichtquelle, welche die Lichteintrittsfläche des Lichtleitkörpers umgibt, dient in der Ausgestaltung der Erfindung nach Anspruch 10 gleichzeitig als Lichtquelle für einen zweiten kreisringförmigen Lichtleitkörper zur seitlichen Beleuchtung der Lippe. Der zweite Lichtleitkörper wird vorzugsweise so angeordnet, daß sich seine obere Stirnfläche auf der Höhe des oberen Randes der Dichtlippe befindet. Er sendet Licht rechtwinkelig zur Flaschenachse aus. Das durch den ersten Lichtleitkörper erzeugte Bild der Oberseite der Mündungslippe wird daher durch den zweiten Lichtleitkörper um ein seitliches Bild der Mündung ergänzt. Auch bei der Verwendung von zwei Lichtleitkörpern werden Defekte nach demselben Prinzip wie bei der Verwendung nur des ersten Lichtleitkörpers sichtbar gemacht.

Der dritte Böschungswinkel von 45° in der Ausgestaltung der Erfindung nach Anspruch 13 ermöglicht, mittels des zweiten Lichtleitkörpers eine maximale Lichtausbeute zu erzielen.

Die Herstellung der Lichtleitkörper aus Acrylglas in der Ausgestaltung der Erfindung nach Anspruch 14 ist besonders kostengünstig.

Damit der Vorteil der gleichmäßigen Beleuchtung der Mündung der zu prüfenden Flasche und die Möglichkeit des Durchlaufbetriebes bei der Prüfung von Flaschen auch bei der Verwendung eines zweiten Lichtleitkörpers erhalten bleiben, ist in der Ausgestaltung der Erfindung nach Anspruch 15 der zweite Lichtleitkörper geteilt. So besteht die Möglichkeit, den Lichtleitkörper in einer zur Flaschenachse rechtwinkeligen Ebene zu öffnen, bis die Mündung unter den ersten Lichtleitkörper bewegt ist, und dann den zweiten Lichtleitkörper kurzzeitig zu schließen. Eine andere Möglichkeit bestunde darin, die zu prüfenden Flaschen unter die Lichtleitkörper zu bewegen, schließlich in deren Mittelachse bis in die optimale Höhe für den Prüfvorgang kurzzeitig anzuheben und dann wieder abzusenken.

Ausführungsbeispiele der Erfindung werden im folgenden unter Bezugnahme auf die Zeichnungen näher beschrieben. Es zeigt
- Fig. 1: eine Gesamtansicht einer Flaschenprüfmaschine, welche mit der Prüfvorrichtung nach der Erfindung versehen ist,
- Fig. 2: in einer Teildarstellung die Mündung einer zu prüfenden Kronenkorkenflasche mit dem Beleuchtungssystem und der Kameraeinrichtung der Flaschenprüfmaschine,
- Fig. 3: als vergrößerte Einzelheit von Fig. 2 die Flaschenmündung mit dem darüber angeordneten Beleuchtungssystem,
- Fig. 4: das Beleuchtungssystem nach Fig. 3 und zusätzlich den Lichtstrahlengang bei der Beleuchtung der oberen Stirnfläche der Mündungslippe,
- Fig. 5: eine Anordnung wie in Fig. 4, aber mit einem ersten Lichtleitkörper, bei dem die Sichtöffnung die Form eines einfachen geraden Kegelstumpfes hat,
- Fig. 6: ein mit der Kameraeinrichtung aufgenommenes Bild einer defektfreien Mündungslippe, und,
- Fig. 7: ein mit der Kameraeinrichtung aufgenommens Bild einer einen Defekt aufweisenden Mündungslippe.

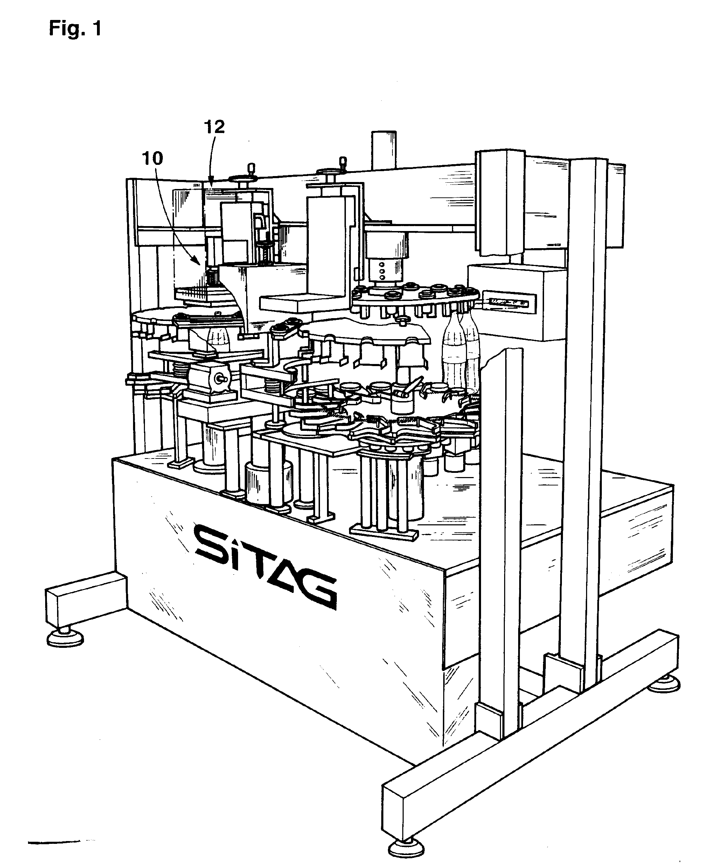

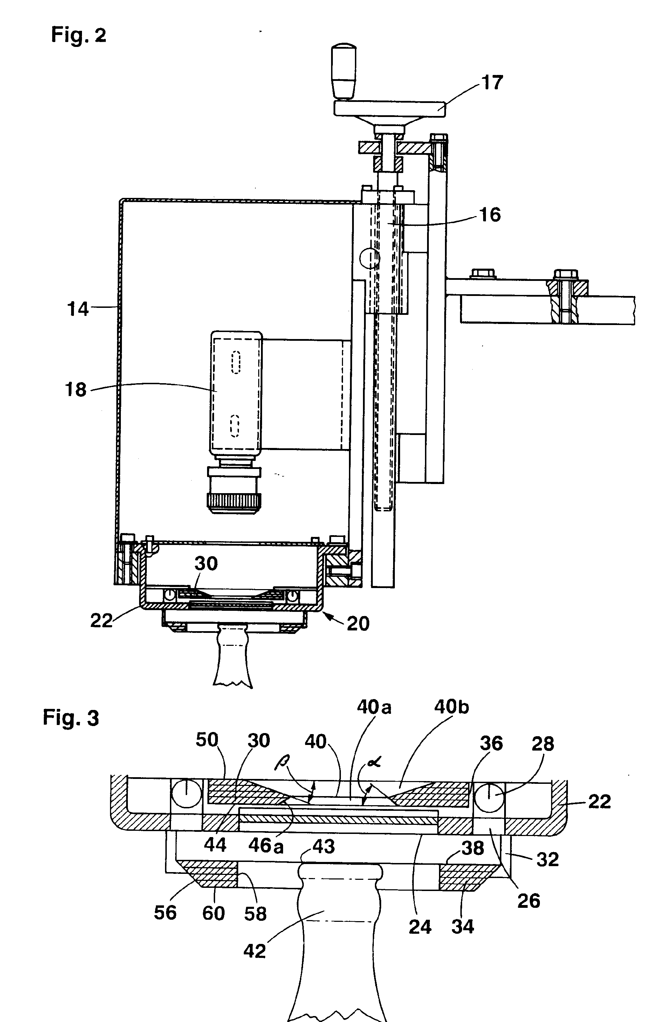

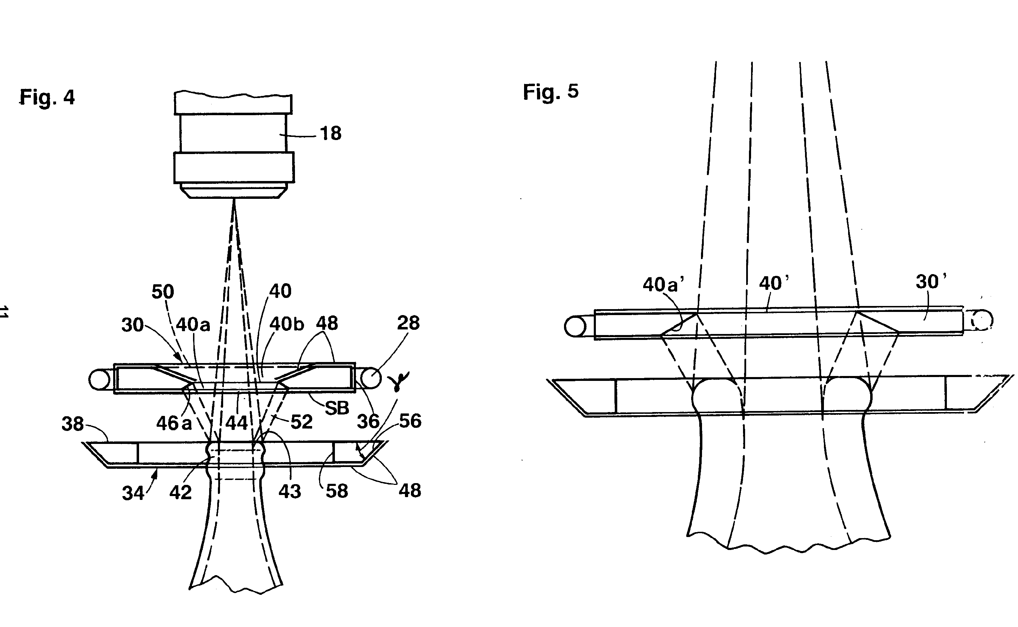

Fig. 1 zeigt eine Gesamtansicht einer Flaschenprüfmaschine, die eine insgesamt mit 10 bezeichnete Vorrichtung zum Prüfen der Flaschenmündung aufweist. Die Maschine hat zwei Drehtische, welche die Flaschen einander übergeben und auf zwei Kreisbahnen bewegen, damit verschiedene Prüfungen der Flaschen vorgenommen werden können. Dem in Fig. 1 links dargestellten Drehtisch ist die Prüfvorrichtung 10 zugeordnet. In der Station, in der die Flaschenmündung zu prüfen ist, ist in der Flaschenachse eine insgesamt mit 12 bezeichnete Kameraeinrichtung angeordnet. Diese weist gemäß der Darstellung in Fig. 2 ein unten offenes Gehäuse 14 auf, das mittels einer Drehspindel 16 und eines Handrads 17 höhenverstellbar ist. In dem Gehäuse 14 ist eine 16-mm-CCD-Videokamera 18 angeordnet, die gemeinsam mit dem Gehäuse 14 oder gesondert auf ähnliche Weise wie das Gehäuse 14 höhenverstellbar ist. Das Gehäuse 14 trägt an seinem unteren Ende ein insgesamt mit 20 bezeichnetes Beleuchtungssystem für die Lippe der Flaschenmündung, das nun unter zusätzlicher Bezugnahme auf die Fig. 3 und 4 näher beschrieben wird.

Das Beleuchtungssystem besteht gemäß den Fig. 2 und 3 aus einem becherförmigen Halter 22, der mit seiner Mittelachse in der Flaschenachse angeordnet ist und am Boden eine ausreichend große mittige Öffnung 24 aufweist. Die mittige Öffnung 24 ist von einer kreisringförmigen Öffnung 26 umgeben. Oberhalb der kreisringförmigen Öffnung 26 ist eine ringförmige Stroboskoplampe 28 als Lichtquelle befestigt. Einwärts der Stroboskoplampe 28 ist in derselben Ebene wie diese ein erster Lichtleitkörper 30 befestigt. An einem unteren Ringflansch 32 des becherförmigen Halters 22 ist ein zweiter Lichtleitkörper 34 befestigt. Die Lichtleitkörper 30, 34 sind jeweils kreisringförmig ausgebildet und bestehen jeweils aus Acrylglas. Die Stroboskoplampe 28 ist in Sichtverbindung mit einer äußeren Umfangsfläche 36 des ersten Lichtleitkörpers 32, die dessen Lichteintrittsfläche bildet. Ebenso ist die Stroboskoplampe 28 in Sichtverbindung mit der oberen Stirnfläche 38 des zweiten Lichtleitkörpers 34, die dessen Lichteintrittsfläche bildet. Der erste Lichtleitkörper 30 hat eine koaxiale Sichtöffnung 40, durch die hindurch die Kamera 18 die Flaschenmündung 42 und insbesonder deren Lippe 43 aufnehmen kann.

Die Sichtöffnung 40 hat die Form eines aus einem ersten Kegelstumpf 40a und aus einem zweiten Kegelstumpf 40b bestehenden Doppelkegelstumpfes. Der Kegelstumpf 40a erweitert sich zu der von der Kameraeinrichtung 12 abgewandten Stirnfläche 44 des ersten Lichtleitkörpers 30 hin und bildet mit seiner Mantelfläche die Lichtaustrittsfläche 46a des Lichtleitkörpers 30. Die Mantellinie des ersten Kegelstumpfes 40a bildet einen Böschungswinkel α mit einem Wert zwischen 30° und 45° und hat im dargestellten Ausführungsbeispiel den bevorzugten Wert von 45°.

Die Mantellinie des zweiten Kegelstumpfes 40b bildet einen zweiten Böschungswinkel β, der ein Drittel bis zwei Drittel des ersten Böschungswinkels α und vorzugsweise die Hälfte des ersten Böschungswinkels α beträgt.

In Fig. 4 ist schematisch der Lichtstrahlengang zwischen dem ersten Lichtleitkörper 30 und der Kamera 18 eingezeichnet. Es ist zu erkennen, daß die Länge der Mantellinie des ersten Kegelstumpfes 40a im wesentlichen gleich der Breite der Lippe 43 der Mündung 42 der dargestellten Kronenkorkenflasche ist. Die untere Stirnfläche 44, die obere Stirnfläche 50 und die Mantelfläche des zweiten Kegelstumpfes 40b sind durch schwarze Beschichtungen 48 abgedeckt, die in Fig. 4 angedeutet sind. Das über die Lichteintrittsfläche 36 in den ersten Lichtleitkörper 30 gelangende Licht erreicht daher praktisch vollständig dessen Lichtaustrittsfläche 46a, ohne daß Streulicht hinzukommt oder nach außen gestreut wird. Das an der Austrittsfläche 46a austretende Licht bildet einen ringförmigen Lichtkegelstumpf 52, der auf die Lippe 43 fällt. In der Mitte der Lippe 43 beträgt der Einfallswinkel des Lichtes etwa 45°, so daß kein Licht von der Mitte der Lippe 43 aus zu der Kamera 18 reflektiert wird, sondern lediglich von den Rändern der Lippe 43 aus, wie es eingangs erläutert worden ist. Erst bei Vorhandensein eines Defekts wird auch Licht aus dem mittleren Bereich der oberen Stirnfläche der Lippe 43 zur Kamera 18 reflektiert.

Der erste Lichtleitkörper wurde für die Funktion der hier beschriebenen Prüfvorrichtung 10 lediglich eine Sichtöffnung mit der Form des ersten geraden Kegelstumpfes 40a benötigen. In Fig. 5 ist ein solcher Lichtleitkörper 30' mit einer solchen Sichtöffnung 40' in Form eines geraden Kegelstumpfes 40a' dargestellt. Die in Fig. 4 dargestellte Ausführungsform, bei welcher die Sichtöffnung 40 die Form des Doppelkegelstumpfes 40a, 40b hat, wird aber bevorzugt.

Zum Feststellen von Defekten an der oberen Stirnfläche der Flaschenmündung 42 ist der erste Lichtleitkörper 30 oder 30' ausreichend. Wenn aber zusätzlich auch noch Defekte an den seitlichen Flächen der Lippe 43 festgestellt werden sollen, wird zweckmäßig zusätzlich der zweite Lichtleitkörper 34 benutzt, der nun näher beschrieben wird.

Der zu dem ersten Lichtleitkörper 30 koaxiale zweite Lichtleitkörper 34 hat einen größeren Außendurchmesser als der erste Lichtleitkörper, wie es in den Zeichnungen dargestellt ist. Es besteht dadurch die Möglichkeit, ein und dieselbe Stroboskoplampe 28 als Lichtquelle für beide Lichtleitkörper zu benutzen. Statt dessen kann aber auch eine gesonderte Lichtquelle (nicht dargestellt) für den zweiten Lichtleitkörper 34 benutzt werden. Durch abwechselndes Einschalten der Lichtquellen des ersten und des zweiten Lichtleitkörpers ließen sich daher abwechselnd Bilder von der oberen Stirnfläche und von der seitlichen Fläche der Lippe 43 aufnehmen.

Der zweite Lichtleitkörper 34 hat eine kegelstumpfförmige äußere, sich zu dem ersten Lichtleitkörper 30 hin erweiternde Mantelfläche 56 und eine zylindrische innere Fläche 58, welche eine zweite Lichtaustrittsfläche für die seitliche Beleuchtung der Lippe 43 bildet. Die Dicke des zweiten Lichtleitkörpers 34 ist wenigstens so groß wie die Breite der Lippe 43 der Mündung 42 einer zu prüfenden Kronenkorkenflasche (vgl. Fig 5) oder etwa doppelt so groß wie die Breite dieser Lippe (vgl. Fig. 3 und 4). Die obere Stirnfläche 38 des zweiten Lichtleitkörpers 34 ist, wie oben erwähnt, auf der Höhe des oberen Randes der Lippe 43 angeordnet. Die Mantelfläche 56 und die untere Stirnfläche 60 sind wiederum durch eine schwarze Beschichtung 48 abgedeckt, die in Fig. 4 angedeutet ist.

Die Mantellinie der Mantelfläche 56 bildet einen Böschungswinkel von 45° (vgl. Fig. 4). Das Licht aus der Stroboskoplampe 28, das parallel zur Flaschenachse über die obere Stirnfläche 38 in den zweiten Lichtleitkörper 34 eintritt, wird daher an der Mantelfläche 56 reflektiert und gelangt rechtwinkelig zur Flaschenachse auf die äußere Seite der Lippe 43. Solange die äußere Seite der Lippe 43 keine Defekte aufweist, bleibt der mit Hilfe des zweiten Lichtleitkörpers 34 erzeugte helle Ring, den die Kamera 18 aufnimmt, gleichmäßig hell. Sollte ein Defekt vorhanden sein, enthält dieser helle Ring den Defekt sichtbar machende dunkle Stellen.

Bei der Prüfung auf Defekte wird die Flasche entweder soweit angehoben, bis sie ihre in den Zeichnungen dargestellte Stellung erreicht, oder aber der zweite Lichtleitkörper 34 wird geteilt ausgebildet (nicht dargestellt). In diesem Fall sind die Teile des zweiten Lichtleitkörpers 34 in einer zur Flaschenachse rechtwinkeligen Ebene auseinander- und zusammenbewegbar. Bei auseinanderbewegten Teilen des zweiten Lichtleitkörpers 34 wird die Flasche in die in den Zeichnungen dargestellte Stellung bewegt, in der die Prüfung erfolgt, woraufhin die Teile zusammenbewegt werden, so daß der zweite Lichtleitkörper 34 die in Fig. 4 oder 5 gezeigte Position einnimmt. Weiter wäre es möglich, die Flasche horizontal zu transportieren und die Prüfvorrichtung 10 zur Ausführung des Prüfvorganges vertikal in die geeignete Höhe über der Mündung 42 der Flasche zu bewegen.

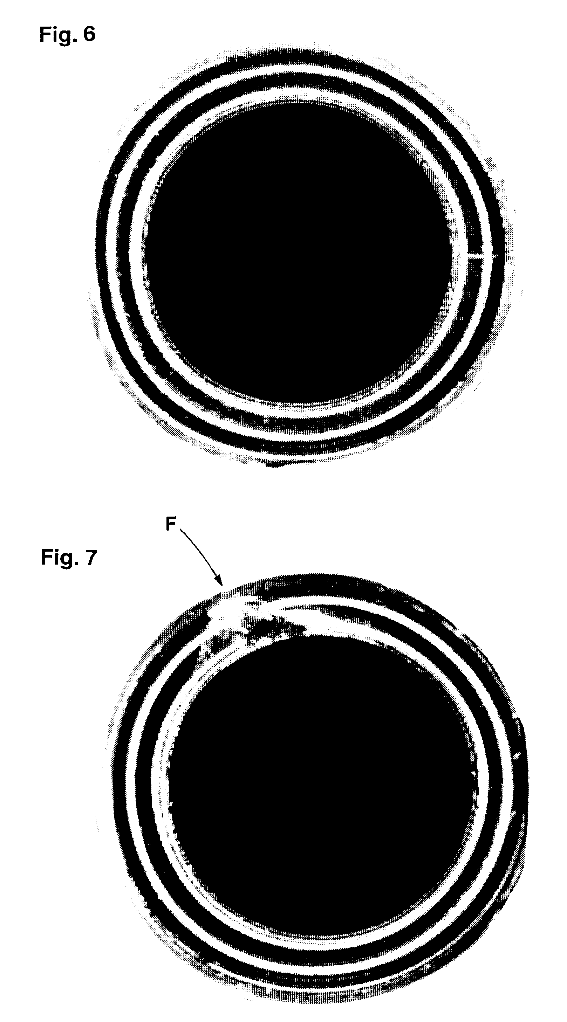

Fig. 6 zeigt ein durch die Kamera 18 aufgenommenes Bild einer Flaschenmündung ohne Defekt, wogegen Fig. 7 die Aufnahme einer Flaschenmündung mit einem Defekt F zeigt. Die durch die Kamera 18 gemachte Aufnahme wird nach Grauwerten ausgewertet. Zu diesem Zweck werden bestimmte Regionen in Form von Kreisringen definiert, die eine bestimmte Anzahl von Bildelementen (Pixels) enthalten, beispielsweise 40 Bildelemente, aus denen der durchschnittliche Grauwert im Vergleich zu der Nachbarregion bestimmt wird. Darüber hinaus wird ein maximaler Schwellenwert für die Grauwertdifferenz zwischen zwei benachbarten Regionen festgelegt. Wenn bei der Flaschenprüfung eine Grauwertdifferenz ermittelt wird, die größer als dieser Schwellenwert ist, wird die Flasche als defekt ausgeworfen.

## Patentansprüche

1. Vorrichtung zum Prüfen der Mündung von Flaschen od. dgl. aus durchsichtigem Material, mit einer in der Achse einer zu prüfenden Flasche angeordneten Kameraeinrichtung zum Aufnehmen von Bildern der Mündung zum Feststellen von Defekten, mit einer Lichtquelle und mit wenigstens einem ersten Lichtleitkörper, der eine koaxiale Sichtöffnung und eine erste Lichtaustrittsfläche zum Beleuchten der Mündung aufweist, **dadurch gekennzeichnet,** daß der erste Lichtleitkörper (30) kreisringförmig ausgebildet ist, daß die Sichtöffnung (40) die Form eines ersten geraden Kegelstumpfes (40a) hat, der sich zu der von der Kameraeinrichtung (12) abgewandten Stirnfläche (44) des ersten Lichtleitkörpers (30) hin erweitert und mit seiner Mantelfläche die Lichtaustrittsfläche (46a) bildet, und daß die Mantellinie des ersten Kegelstumpfes (40a) mit der Stirnfläche (44) einen Böschungswinkel (α) mit einem Wert zwischen 30° und 45° bildet.

2. Vorrichtung nach Anspruch 1, dadurch gekennzeichnet, daß die Sichtöffnung (40) die Form eines Doppelkegelstumpfes (40a, 40b) hat, der aus dem ersten und aus einem zweiten Kegelstumpf, welcher sich zu der Kameraeinrichtung (12) zugewandten Stirnfläche (50) des ersten Lichtleitkörpers (30) hin erweitert, gebildet ist.

3. Vorrichtung nach Anspruch 1 oder 2, dadurch gekennzeichnetnet, daß der erste Böschungswinkel (α) 45° beträgt.

4. Vorrichtung nach Anspruch 2 oder 3, dadurch gekennzeichnet, daß die Mantellinie des zweiten Kegelstumpfes (40b) einen zweiten Böschungswinkel (β) bildet, der ein Drittel bis zwei Drittel des ersten Böschungswinkels (α) beträgt.

5. Vorrichtung nach Anspruch 4, dadurch gekennzeichnet, daß der zweite Böschungswinkel (β) die Hälfte des ersten Böschungswinkels (α) beträgt.

6. Vorrichtung nach einem der Ansprüche 1 bis 5, dadurch gekennzeichnet, daß die Länge der Mantellinie des ersten Kegelstumpfes (40a) im wesentlichen gleich der Breite der Lippe (43) der Mündung (42) einer Kronenkorkenflasche ist.

7. Vorrichtung nach einem der Ansprüche 1 bis 6, dadurch gekennzeichnet, daß die Lichtquelle (28) als ein Kranz um die äußere Umfangsfläche (36) des ersten Lichtleitkörpers (30) angeordnet ist und daß die beiden Stirnflächen (44, 50) des ersten Lichtleitkörpers (30) und die Mantelfläche des zweiten Kegelstumpfes (40b) durch eine schwarze Beschichtung (48) abgedeckt sind.

8. Vorrichtung nach Anspruch 7, dadurch gekennzeichnet, daß der Kranz aus mehreren einzelnen Stroboskoplampen (28) besteht.

9. Vorrichtung nach Anspruch 7, dadurch gekennzeichnet, daß der Kranz aus einer einzelnen kreisringförmigen Stroboskoplampe (28) besteht.

10. Vorrichtung nach einem der Ansprüche 1 bis 9, gekennzeichnet, durch einen koaxialen zweiten kreisringförmigen Lichtleitkörper (34), der benachbart zu dem ersten Lichtleitkörper (30) auf der von der Kameraeinrichtung (12) abgewandten Seite desselben angeordnet ist, einen größeren Außendurchmesser als der erste Lichtleitkörper (30) aufweist, eine kegelstumpfförmige äußere, sich zu dem ersten Lichtleitkörper hin erweiternde dritte Mantelfläche (56) und eine zylindrische innere Fläche (58) hat, welche eine zweite Lichtaustrittsfläche zur seitlichen Beleuchtung der Lippe (43) bildet.

11. Vorrichtung nach Anspruch 10, dadurch gekennzeichnet, daß die Dicke des zweiten Lichtleitkörpers (34) etwa doppelt so groß wie die Breite der Lippe (43) der Mündung (42) einer zu prüfenden Kronenkorkenflasche ist.

12. Vorrichtung nach Anspruch 10 oder 11, dadurch gekennzeichnet, daß die dritte Mantelfläche (56) und die von dem ersten Lichtleitkörper (30) abgewandte Stirnfläche (60) des zweiten Lichtleitkörpers (34) durch eine schwarze Beschichtung (48) abgedeckt sind.

13. Vorrichtung nach einem der Ansprüche 10 bis 12, dadurch gekennzeichnet, daß die Mantellinie der dritten Mantelfläche (56) einen dritten Böschungswinkel (γ) von 45° bildet.

14. Vorrichtung nach einem der Ansprüche 1 bis 13, dadurch gekennzeichnet, daß das Lichtleitkörpermaterial Acrylglas ist.

15. Vorrichtung nach einem der Ansprüche 10 bis 14, dadurch gekennzeichnet, daß der zweite Lichtleitkörper (34) geteilt ist und daß seine Teile in einer zur Achse einer zu prüfenden Flasche rechtwinkeligen Ebene auseinander und -zusammenbewegbar sind.

## Claims

1. An apparatus for examining the mouths of bottles or the like made of transparent material, in which a camera device is disposed on the axis of a bottle to be examined to take photographs of the mouth in order to detect defects, the apparatus also having a light source and at least a first light-conducting member which has a coaxial viewing opening and a first light exit surface to illuminate the mouth,
characterised in that the first light-conducting member (30) is annular in construction, that the viewing opening (40) has the shape of a first right truncated cone (40a) which widens out towards the end face (44) of the first light-conducting member (30) remote from the camera device (12) and forms the light exit surface (46a) with its generated surface, and that the generated line of the first truncated cone (40a) forms with the end face (44) an angle of slope (α) with a value between 30° and 45°.

2. An apparatus according to claim 1, characterised in that the viewing opening (40) has the shape of a double truncated cone (40a, 40b) which is formed from the first truncated cone and from a second truncated cone which widens out towards the end face (50) of the first light-conducting member (30) facing the camera device (12).

3. An apparatus according to claim 1 or 2, characterised in that the first angle of slope (α) is 45°.

4. An apparatus according to claim 2 or 3, characterised in that the generated line of the second truncated cone (40b) forms a second angle of slope (β) which is cone-third to two-thirds of the first angle of slope (α).

5. An apparatus according to claim 4, characterised in that the second angle of slope (β) is half the first angle of slope (α).

6. An apparatus according to any one of claims 1 to 5, characterised in that the length of the generating line of the first truncated cone (40a) is substantially equal to the width of the lip (43) of the mouth (42) of a crown cork bottle.

7. An apparatus according to any one of claims 1 to 6, characterised in that the light source (28) is arranged in the form of a ring around the outer circumferential surface (36) of the first light-conducting member (30), and that the two end faces (44, 50) of the first light-conducting member (30) and the generated surface of the second truncated cone (40b) are covered by a black coating (48).

8. An apparatus according to claim 7, characterised in that the ring consists of a plurality of individual stroboscope lamps (28).

9. An apparatus according to claim 7, characterised in that the ring consists of a single toroidal stroboscope lamp (28).

10. An apparatus according to any one of claims 1 to 9, characterised by a coaxial second annular light-conducting member (34) which is arranged adjacent to the first light-conducting member (30) at the side thereof remote from the camera device (12), has a larger external diameter than the first light-conducting member (30), and has a truncated cone-shaped external third generated surface (56) widening out towards the first light-conducting member and a cylindrical inner surface (58) which forms a second light exit surface for the lateral illumination of the lip (43).

11. An apparatus according to claim 10, characterised in that the thickness of the second light-conducting member (34) is about twice as great as the depth of the lip (43) of the mouth (42) of a crown cork bottle to be examined.

12. An apparatus according to claim 10 or 11, characterised in that the third generated surface (56) and the end face (60) of the second light-conducting member (34) remote from the first light-conducting member (30) are covered by a black coating (48).

13. An apparatus according to any one of claims 10 to 12, characterised in that the generated line of the third generated surface (56) forms a third angle of slope ( ) of 45°.

14. An apparatus according to any one of claims 1 or 13, characterised in that the material of the light-conducting members in acrylic glass.

15. An apparatus according to any one of claims 10 or 14, characterised in that the second light-conducting member (34) is divided into a plurality of parts that can be moved apart and together in a plane at right angles to the axis of a bottle to be examined.

## Revendications

1. Dispositif pour le contrôle de la bague de bouteilles ou analogues en matière transparente, comprenant un dispositif de caméra disposé dans l'axe d'une bouteille à contrôler, destiné à prendre des vues de la bague pour constater des défauts, une source lumineuse et au moins un premier corps conducteur de lumière qui présente une ouverture de visée coaxiale et une première surface de sortie de lumière destinée à éclairer la bague, caractérisé en ce que le premier corps conducteur de lumière (30) est de forme circulaire, en ce que l'ouverture de visée (40) a la forme d'un premier tronc de cône droit (40a) qui s'élargit vers la face frontale (44) du premier corps conducteur de lumière (30) qui est à l'opposé du dispositif de caméra (12), et qui forme la surface de sortie de lumière (46a) par sa surface latérale, et en ce que la génératrice du premier tronc de cône (40a) forme avec la surface frontale (44) un angle de pente (α) d'une valeur comprise entre 30° et 45°.

2. Dispositif selon la revendication 1, caractérisé en ce que l'ouverture de visée (40) a la forme d'un double tronc de cône (40a, 40b) qui est formé du premier tronc de cône et d'un second tronc de cône qui s'élargit vers la surface frontale (50) du premier corps conducteur de lumière (30) qui est dirigée vers le dispositif de caméra (12).

3. Dispositif selon la revendication 1 ou 2, caractérisé en ce que le premier angle de pente (α) est de 45°.

4. Dispositif selon la revendication 2 ou 3, caractérisé en ce que la génératrice du second tronc de cône (40b) forme un deuxième angle de pente (β) qui représente un tiers à deux tiers du premier angle de pente (α).

5. Dispositif selon la revendication 4, caractérisé en ce que le deuxième angle de pente (β) représente la moitié du premier angle de pente (α).

6. Dispositif selon une des revendications 1 à 5, caractérisé en ce que la longueur de la génératrice du premier tronc de cône (40a) est sensiblement égale à la largeur de la lèvre (43) de la bague (42) d'une bouteille à bouchon couronne.

7. Disposistif selon une des revendications 1 à 6, caractérisé en ce que la source lumineuse (28) est disposée sous la forme d'une couronne autour de la surface circonférentielle extérieure (36) du premier corps conducteur de lumière (30), et en ce que les deux surfaces frontales (44, 50) du premier corps conducteur de lumière (30) et la surface latérale du second tronc de cône (40b) sont recouvertes d'un revêtement noir (48).

8. Dispositif selon la revendication 7, caractérisé en ce que la couronne est composé de plusieurs lampes à éclairs distinctes (28).

9. Dispositif selon la revendication 7, caractérisé en ce que la couronne est composé d'une unique lampe à éclairs (28) en forme de couronne de cercle.

10. Dispositif selon une des revendications 1 à 9, caractérisé par un second corps conducteur de lumière (34) en forme de couronne de cercle, coaxial, qui est disposé adjacent au premier corps conducteur de lumière (30), sur le côté de ce premier corps qui est le plus éloigné du dispositif à caméra (12), présente un plus grand diamètre extérieur que le premier corps conducteur de lumière (30), possède une troisième surface latérale extérieure tronconique (56) qui s'élargit vers le premier corps conducteur de lumière, et une surface intérieure cylindrique (58) qui forme une seconde surface de sortie de lumière servant pour l'éclairage latéral de la lèvre (43).

11. Dispositif selon la revendication 10, caractérisé en ce que l'épaisseur du second corps conducteur de lumière (34) est à peu près deux fois plus grande que la largeur de la lèvre (43) de la bague (42) d'une bouteille à bouchon couronne qu'il s'agit de contrôler.

12. Dispositif selon la revendication 10 ou 11, caractérisé en ce que le troisième surface latérale (56) et la surface frontale (60) du second corps conducteur de lumière (34) qui est éloignée du premier corps conducteur de lumière (30) sont recouvertes d'un revêtement noir (48).

13. Dispositif selon une des revendications 10 à 12, caractérisé en ce que la génératrice de la troisième surface latérale (56) forme un troisième angle de pente (γ) de 45°.

14. Dispositif selon une des revendications 1 à 13, caractérisé en ce que la matière du corps conducteur de lumière est un verre acrylique.

15. Dispositif selon une des revendications 10 à 14, caractérisé en ce que le second corps conducteur de lumière (34) est divisé et en ce que ses pièces peuvent être écartées et rapprochées l'une de l'autre dans un plan perpendiculaire à l'axe de la bouteille à contrôler.
